## Europäisches Patentamt

## European Patent Office

## Office européen des brevets

(19)

(11) Veröffentlichungsnummer: **0 217 833**
**B1**

(12) **EUROPÄISCHE PATENTSCHRIFT**

(45) Veröffentlichungstag der Patentschrift: **25.07.90**

(51) Int. Cl.⁵: **G 01 M 3/32**

(21) Anmeldenummer: **86901769.9**

(22) Anmeldetag: **09.04.86**

(86) Internationale Anmeldenummer:
**PCT/CH86/00043**

(87) Internationale Veröffentlichungsnummer:
**WO 86/06166 23.10.86 Gazette 86/23**

(60) Teilanmeldung 89110862.3 eingereicht am
**09/04/86.**

(54) **VERFAHREN ZUR DICHTEPRÜFUNG VON BEHÄLTNISSEN SOWIE DICHTEPRÜFEINRICHTUNG HIERZU.**

(30) Priorität: **12.04.85 CH 1577/85**

(43) Veröffentlichungstag der Anmeldung:
**15.04.87 Patentblatt 87/16**

(45) Bekanntmachung des Hinweises auf die
Patenterteilung:
**25.07.90 Patentblatt 90/30**

(84) Benannte Vertragsstaaten:
**AT BE CH DE FR GB IT LI LU NL SE**

(56) Entgegenhaltungen:
**DE-A-2 829 154        US-A-3 579 775**
**DE-A-3 106 981        US-A-3 987 664**
**US-A-3 065 324        US-A-4 272 985**

**Measurement Techniques, band 12, no 12,
December 1978, New York (US) VT Gladchenko
et al: "Pressure-drop system for checking the
airtightness of containers", pages 1678-1680**

**Soviet Journal of Non-destructive Testing, band
20, no 6, June 1984, New York (US) EI
Dogonkina et al: "Use of microcomputers in
tests of vacuum tightness", pages 395-400**

**Patent Abstract of Japan, band 8. no 72 (P-
265)(1509) 4 April 1984 & JP A 58216926**

(73) Patentinhaber: **Lehmann, Martin**
**Obere Farnbühlstrasse 1**
**5610 Wohlen 1 (CH)**

(72) Erfinder: **Lehmann, Martin**
**Obere Farnbühlstrasse 1**
**5610 Wohlen 1 (CH)**

(74) Vertreter: **Troesch, Jacques J., Dipl.-Ing. et al**
**Walchestrasse 19**
**CH-8035 Zürich (CH)**

(56) Entgegenhaltungen:
**Patent Abstract of Japan, band 9, no 76 (P-
346)(1799) 5 April 1985 & JP A 59206737**

**Beschreibung**

Die vorliegende Erfindung betrifft ein Verfahren zur Dichteprüfung von Behältnissen, bei dem man ein Behältnis unter Druck setzt oder evakuiert und eine Druckgrösse misst, als Leckagemass-Indikation, und wobei man eine Grenzdruckgrösse für den Entscheid, ob ein Behältnis als dicht oder als undicht gewertet wird, vorgibt und man weiter, zeitlich von der Messung der Druckgrösse verschoben, eine für die dann vorherrschende Behältnistemperatur signifikante Grösse misst und eine davon abgeleitete Grösse als Korrektur der gemessenen Druckgrösse einsetzt.

Dabei sei betont, dass eine nachfolgend als Druckgrösse" bezeichnete Grösse eine Druckdifferenz, ein Absolutdruck oder eine aus solchen abgeleitete Grösse, wie mechanische Verformung etc., sein kann.

Im weiteren betrifft die Erfindung eine Dichteprüfeinrichtung für Behältnisse mit einer prüfstation, worin eine für eine Behältnisleckage signifikante Druckgrösse gemessen wird, sowie mit einer Messeinrichtung für eine für die Behältnistemperatur signifikante Grösse, wobei die gemessene Druckgrösse, unter Berücksichtigung der für die Behältnistemperatur signifikanten Grösse mit einer Grenzdruckgrösse verglichen wird, für einen Entscheid, ob ein Behältnis dicht oder undicht ist.

Behältnisse werden heute mit grosser Fabrikationsgeschwindigkeit hergestellt. Dies betrifft besonders geschweisste Dosen. Die steigende Produktionsgeschwindigkeit einerseits und die Verwendung von immer dünnwandigerem Material anderseits, erfordern eine hohe Präzision beim Herstellungsprozess, damit eine hohe Dichte der Behältnisse gewährleistet ist. Auch innerhalb einer Abfüllinie, also vom Standpunkt des Dosenverarbeiters her, ist eine hohe Dichte erforderlich, damit Lebensmittel nicht verderben, umweltfeindliche, oder sehr wertvolle Materialien nicht aus den Behältnissen auslaufen. Sowohl die Hersteller, wie auch die Verarbeiter von derartigen Behältnissen sind auf eine gut funktionierende, zuverlässige Qualitätskontrolle angewiesen. Kleinste Undichten bzw. Leckagen müssen nachgewiesen werden können. Diese hohe Anforderung an die Dichteprüfung kann heute schon befriedigt werden.

Die Prüfung der Dichte kann auf verschiedenen Wegen erfolgen. Dabei wird das Behältnis entweder durch Luft oder sonst ein Gas unter Druck oder unter Unterdruck gesetzt. Bei einem allenfalls vorhandenen Leck strömt dann Luft bzw. Gas in die bzw. von der Umgebung aus bzw. ein, wodurch sich der Behältnisinnendruck verändert.

Bei den einen Methoden wird der Behältnisinnendruck beobachtet, d.h. es wird die Behältnisinnendruckdifferenz innerhalb einer vorgegebenen Zeitspanne registriert und verglichen mit einer Grenzdruckänderungsgrösse, welche bei einem Behältnis auftritt, der das grösste noch tolerierbare Leck aufweist. Falls die gemessene Innendruckänderung grösser ist als die vorgegebene Grenzdruckdifferenz, dann wird das Behältnis als Ausschuss registriert. Hier wird somit als Druckgrösse eine Aenderung des Behältnisinnendruckes beobachtet. Bei anderen Methoden wird das zu prüfende Behältnis in eine Autoklave eingeschlossen. Die Luft, welche aus dem zu prüfenden Behälter ausfliesst, strömt in die Autoklave und erhöht den dortigen Druck, was wiederum registriert wird. Hier wird somit als Druckgrösse eine Aenderung des Behältnisumgebungsdruckes registriert.

Unter Berücksichtigung, dass sich aufgrund der Leckage der Behältnisinnendruck absenkt (bei Evakuierung anhebt) und der Behältnisumgebungsdruck erhöht (bei Evakuierung erniedrigt), ist es auch durchaus möglich, in Kombination das Verhalten des Behältnisinnendruckes zum Behältnisaussendruck zu beobachten.

Unter Berücksichtigung dieser verschiedenen Methoden wird im folgenden bei der Dichteprüfung generell von der Registrierung einer Druckgrösse gesprochen. Wie diese gemessen wird, direkt oder indirekt, ist im Rahmen der vorliegenden Erfindung belanglos.

Die Behälter werden entweder nach ihrer Herstellung oder nach ihrer Abfüllung auf Dichte geprüft. In beiden Fällen weisen sie dabei je nach vorangegangenem Fabrikationsablauf, undefinierte Temperaturen auf. Diese Temperatur variiert nicht nur von Anlage zu Anlage, sondern auch innerhalb einer Anlage an derselben Stelle. Als Gründe für die Temperaturstreuung kann die Verarbeitung unterschiedlicher Behälter oder eine variable Produktionsgeschwindigkeit, eine variable Umgebungstemperatur an verschiedenen Stellen oder ein unterschiedliches Behältermaterial genannt werden. Es ist auch denkbar, dass aufgrund eines Fehlers in der Produktionsstrasse letztere angehalten werden muss, dann wieder gestartet wird, derart, dass an derselben Stelle der Produktionsstrasse, die zu prüfenden Behältnisse mit verschiedenen Temperaturen anfallen. Zum Zeitpunkt der Dichteprüfung der Behältnisse muss also die Behältnistemperatur keinesfalls immer gleich sein. Auch bei in relativ engen Toleranzen konstant gehaltener Umgebungstemperatur ist die Behältnistemperatur trotzdem nicht immer gleich, denn letztere brauchen bei der Dichteprüfstelle noch keinesfalls thermisch mit der Umgebung ausgeglichen zu sein.

Im weiteren wird nun vom Fall gesprochen, an dem das Behältnis unter "Ueber"-Druck gesetzt wird. Die Verhältnisse bleiben aber grundsätzlich gleich, wenn das Behältnis unter "Unter"-Druck gesetzt wird. Wird nun ein Behältnis mit Luft gefüllt, so wird die Behälterwand aufgrund der erhöhten Temperatur gegenüber der eingeführten Luft Wärme an diese abgeben. Durch die dadurch bedingte Temperaturerhöhung der Luft erhöht sich bei gleichbleibendem Luftvolumen deren Druck. Die Druckdifferenz gegenüber der Umgebung wird grösser, die Luftdichte verändert sich. Somit verändert sich aber auch die Leckagerate gegenüber derjenigen, welche bei einer anderen Temperatur des gleichen Luftvolumens im Behältnis auftreten würde. Sie wird bei erhöhtem Druck grösser.

2

Wurde als Grenzdruckgrösse eine Druckgrösse bei einer tieferen Temperatur vorgegeben, so wird die Dose bei erhöhter Temperatur als Ausschuss gewertet, obwohl dies nicht zutrifft: Die erhöhte Leckagerate ist auf den temperaturbedingten erhöhten Innendruck zurückzuführen.

Aus der DE—A—3 106 981 ist es nun bekannt, an einer Druckprüfkammer für Behältnisse zwei Temperaturfühler vorzusehen, wovon der eine dem zu prüfenden Bauteil zustellbar ist. Mittels dieser Temperaturfühler wird eine Temperaturdifferenz gemessen, vor der eigentlichen Druckprüfphase und aus der gemessenen Temperaturdifferenz, welche praktisch gleichzeitig mit der Druckmessung erfolgt, wird die Druckmessung korrigiert. Nachteilig an diesem Vorgehen ist, dass an der Druckprüfstation zusätzliche Messfühler vorgesehen werden müssen, und dass die Belegungszeit der Prüfstation durch die vorzunehmende Temperaturmessung zusätzlich zur Druckmessung verlängert wird.

Aus der US—A—3 987 664 ist es im weiteren bekannt, aus dem Einschwingverhalten einer Druckgrösse zu identifizieren, ob der zu prüfende Behälter kalt, warm oder heiss ist. Hierzu werden Referenz-Kurvenverläufe abgespeichert. Der seitens eines vorzusehenden Auswertungsrechners zu betreibende Aufwand ist gross, indem empirisch und anhand von Referenzbehältnissen erfasste Referenzkurven abgespeichert und zu Vergleichszwecken beigezogen werden müssen.

Im weiteren ist es aus Measurement Techniques, Band 12, No. 12, Dezember 1978, New York (US) V. T. Gladchenko et al.: "Pressure-drop system for checking the airtightness of containers", Seiten 1678 bis 1680 bekannt, wie die theoretische Abhängigkeit des Druckes in einem Behältnis von der Behältnistemperatur und der Zeit ist. Diese theoretischen Betrachtungen können grundsätzlich verwendet werden, Temperaturkompensationen im hier interessierenden Sinne vorzunehmen.

Aus Soviet Journal Of Nondestructive Testing, Band 20, No. 6, Juni 1984, New York (US), E. I. Dogonkina et al.: "Use of microcomputers in tests of vacuum tightness". Seiten 395 bis 400 ist es im weiteren bekannt, ein zu prüfendes Behältnis unter Druck zu setzen, eine Serie von Messungen auszuführen, einschliesslich der Messung von Druck, Temperatur, Druckgradient etc. Insbesondere Druck und Temperatur werden gleichzeitig gemessen, somit in einer Druckmessstation, was wiederum das Vorsehen entsprechender Sensoren, insbesondere von Temperatursensoren, an Druckmessstationen nötig macht, mit dem entsprechenden konstruktiven, die Druckverhältnisse in der Kammer berücksichtigenden Aufwand.

Auch die JP—A—58 216 926 schlägt das gleichzeitige Messen von Druck und Temperatur vor, was bezüglich des Konstruktionsaufwandes die obgenannten Nachteile mit sich bringt.

Die JP—A—59 206 737 sowie die US—A—3 065 324, die DE—A—2 829 154 und die US—A—3 579 775 beschreiben spezielle Temperaturmessanordnungen bzw. Verfahren.

Aus der US—A—4 272 985 ist es nun im weiteren bekannt, um Temperaturfehler an einem Verfahren zur Dichteprüfung von Behältnissen zu korrigieren, in einem ersten Vorgehensschritt am zu prüfenden Behältnis Luft unter Umgebungsdruck einzukapseln. Druckänderungen an dieser als Anfangsbedingung unter Atmosphärendruck stehenden Luft im Behältnis sind ausschliesslich temperaturgegeben und werden registriert. In einem zweiten Vorgehensschritt wird das zu prüfende Behältnis unter Ueber- oder Unterdruck gesetzt und als Leckageindikation wird dann eine Druckgrösse gemessen. Das bei der gekapselten Umgebungsluft registrierte Druckänderungssignal wird als Korrekturgrösse für das registrierte Drucksignal verwendet. Hier wird die Druckmessung, die signifikant für die Leckage des Behältnisses ist, zeitlich verschoben von einer weiteren Druckmessung vorgenommen, die schliesslich signifikant für die Behältnistemperatur ist.

Bei diesem Vorgehen ist es nachteilig, dass am selben zu prüfenden Behältnis hintereinander zwei Druckmessungen vorgenommen werden müssen, eine signifikant für die Behältnistemperatur, die zweite für die Lekkage, was relativ zeitaufwendig ist, womit die Prüfstation durch ein zu Prüfendes Behältnis lange belegt wird. Anderseits müssen an dieser Prüfstation keine zusätzlichen Sensoren vorgesehen werden, denn das temperatursignifikante Signal wird aus einer Druckmessung ermittelt, mithin mittels eines Sensors, der ohnehin vorzusehen ist.

Ausgehend von einem Verfahren bzw. einer Einrichtung der letztgenannten Art setzt sich die vorliegende Erfindung zum Ziel, ein Verfahren bzw. eine Dichteprüfeinrichtung obgenannter Gattung zu schaffen, bei welcher die genannten Nachteile behoben werden, d.h. die Prüfstation nur so lange belegt wird, wie dies für die Leckage signifikante Druckmessung notwendig ist und dabei gleichzeitig nicht zusätzliche Messensoren an der prüfstation vorzusehen sind.

Dies wird bei der Ausbildung des genannten Verfahrens nach dem kennzeichnenden Teil von Anspruch 1 erreicht, bei der genannten Dichteprüfeinrichtung gemäss dem kennzeichnenden Teil von Anspruch 13.

Es wird somit die Temperaturmessung vor oder nach der Dichteprüfung vorgenommen. Die gemessene Temperatur kann nicht direkt zu Druckgrössenkorrekturzwecken beigezogen werden, sondern erst, nachdem durch zeitliche Vorwärts oder Rückwärts-Extrapolation auf die Temperatur im Zeitraum der Dichteprüfung geschlossen worden ist, wozu eine Vorkenntnis oder Identifikation des thermischen Verhaltens des Behältnisses erforderlich ist. Erst nach Rückschluss auf die Temperatur bei der Dichteprüfung kann letztere wiederum korrigierend auf die eine oder andere der Druckgrössen angewandt werden.

Es wird nun weiter vorgeschlagen, dass man das thermische Zeitverhalten des Behältnisses bestimmt, daraus gemäss Wortlaut von Anspruch 3 die Temperatur des Behältnisses im Zeitraum der Druckgrössenmessung bestimmt.

Im weiteren wird vorgeschlagen, dass die Temperaturabhängigkeit der Grenzdruckgrösse oder der gemessenen Druckgrösse entweder nach Vorliegen der Behältnistemperatur im Zeitabschnitt der Druckgrössenmessung gemäss Wortlaut von Anspruch 4 berücksichtigt wird, oder dass diese Abhängigkeit als Funktion der unabhängigen Variablen "Temperatur" abgespeichert wird und mit der bestimmten Behältnistemperatur bei der Druckgrössenmessung in die Funktion eingegangen wird, gemäss Wortlaut von Anspruch 5.

Es wird weiter vorgeschlagen, gemäss Wortlaut von Anspruch 6, dass man das thermische Zeitverhalten des Behältnisses aus Messung mindestens einer Behältnistemperatur sowie Vorbestimmung der thermischen Behältniszeitkonstanten — letzteres rechnerisch, unter Berücksichtigung die Zeitkonstante festlegender Behältnis- und/oder Füllmediums-Parametern, oder aber experimentell gemäss Wortlaut von Anspruch 7 — bestimmt.

Diesbezüglich flexibler wird man, unter Berücksichtigung, dass sich das thermische Zeitverhalten der Behältnisse, insbesondere bei variablem Behältnistyp, ändern kann, indem man das thermische Zeitverhalten des Behältnisses aus zeitverschobenen Messungen von Behältnistemperaturen identifiziert, unter Berücksichtigung des Messungs-Zeitabstandes gemäss Wortlaut von Anspruch 8.

Bei allen erwähnten Varianten wird die Temperaturmessung dadurch rauschunanfälliger, dass man sie durch Mittelung mehrerer Messungen über die Messzeit durchführt.

Ein weiteres Problem bei der Temperaturmessung in allen erwähnten und noch zu erwähnenden Verfahrensvarianten ergibt sich dadurch, dass die Temperatur an Behältnis nicht ausgeglichen zu sein braucht. Zudem ist die Wärmestrahlung, die insbesondere bei kontaktloser Temperaturmessung eigentlich registriert wird, abhängig vom Material, der Oberflächenbearbeitung etc. an verschiedenen Behältnisstellen. Um deshalb eine repräsentative Temperaturmessung zu erzielen, wird weiter vorgeschlagen, dass man letztere durch Mittelung mehrerer Messungen an unterschiedlichen Behältnisstellen durchführt, gemäss Wortlaut von Anspruch 10.

Letzterwähntes Problem wird aber auf höchst elegante Art und Weise dadurch gelöst, dass man gemäss Wortlaut von Anspruch 11 die Behältnistemperatur vor der Druckgrössenmessung und vor Schliessen des Behältnisses durch Messung der thermischen Strahlung aus dem Behältnishohlraum durchführt, als Messung des integralen thermischen Energie-Zustandes des Behältnisses. Es hat sich nämlich gezeigt, dass der Behältnishohlraum ähnlich einem schwarzen Körper wirkt und die Temperaturstrahlung aus diesem Hohlraum bereits die gesuchte repräsentative, d.h. gemittelte Temperatur ist. Diese Messung berücksichtigt lokal unterschiedliche Innen- und Aussen-Oberflächen, -materialien etc.

Letzterwähntes Vorgehen ist insbesondere bei Relativbewegung von Behältnis und Temperaturmessanordnung ausserordentlich einfach, wobei dann in weiter vorteilhafter Weise die Aenderung der detektierten Strahlung bei Einlaufen der Behältnisöffnung in den Sensibilitätsbereich der Anordnung als Kriterium dafür verwendet wird, wann die Anordnung repräsentativ misst. Mit anderen Worten wird ausgenützt, dass die detektierte Wärmestrahlung wesentlich unterschiedlich ist, je nachdem, ob der Detektor der Anordnung die Strahlung detektiert, wenn kein Behältnishohlraum gegenüberliegt, oder wenn dies der Fall ist. Diese Aenderung wird direkt dazu ausgenützt festzulegen, wann das Detektorausgangssignal für die Behältnistemperatur repräsentativ ist, d.h. wann dieses Ausgangssignal auch weiter zu verarbeiten ist.

Im weiteren wird nun an der Dichteprüfeinrichtung gemäss Wortlaut von Anspruch 14 die Messeinrichtung mit einem Eingang einer Korrektureinheit verbunden, an deren Ausgang ein Signal in Abhängigkeit des Signals an Eingang erscheint, wobei vorzugsweise der Ausgang der Korrektureinheit auf einen Eingang einer Vergleichseinheit geführt ist, mit einem zweiten Eingang, welch letzterem ein weiteres Signal zugeführt wird, das der gemessenen, für die Behältnisleckage repräsentativen Druckgrösse entspricht.

Die Korrektureinheit umfasst in einer Ausführungsvariante eine Recheneinheit.

Im weiteren wird vorgeschlagen, gemäss Wortlaut von Anspruch 16, dass ein Ausgang der Messeinrichtung auf einem Eingang einer Zeitfunktionseinheit geführt ist, dass ein Schaltorgan vorgesehen ist, welches die Vornahme der Dichteprüfung anzeigt, wobei das Schaltorgan dann das Auslesen des Ausgangssignals der Zeitfunktionseinheit ansteuert, und das Ausgangssignal der Zeitfunktionseinheit, der Behältnistemperatur bei Auslösen des Schaltorgans entsprechend, auf den Eingang der Korrektureinheit geführt ist.

Es wird somit mit der Temperaturmessung eine Zeitfunktion gestartet, die dem thermischen Verhalten des Behältnisses entspricht und bei Vornahme der Dichteprüfung wird der dann vorherrschende Zeitfunktionswert ausgelesen.

Wie unter Einsatz heute üblicher Mikroprozessorentechnik wird nun weiter gemäss Wortlaut von Anspruch 17 vorgeschlagen, dass die Zeitfunktionseinheit eine Recheneinheit umfasst, mit einer Eingabeeinrichtung zur Eingabe von Behältnis- und/oder Füllmediums-parametern, und dass sie die thermische Zeitkonstante des Behältnisses berechnet und vorzugsweise, mindestens bei Auslösen des Schaltorgans aus dem Signal am Eingang der Zeitfunktionseinheit als Anfangswert der Zeitkonstanten, den Wert einer Zeitfunktion im Zeitpunkt des Auslösens berechnet und ausgibt.

4

In einer weiteren Ausführungsvariante gemäss Anspruch 18 gibt die Messeinrichtung zu mindestens zwei Zeitpunkten einen Messwert aus und die Zeitfunktionseinheit identifiziert aus den Messwerten und der Zeitdifferenz ihres Auftretens das thermische Zeitverhalten des Behältnisses, insbesondere dessen Zeitkonstante; die Zeitfunktionseinheit simuliert dann dieses Verhalten mit mindestens einem Temperaturmesswert als Stützwert. Durch das besagte Schaltorgan wird dann ein Ausgang der Zeitfunktionseinheit auf die Korrektureinheit geschaltet, mit einem dem für die Behältnistemperatur bei der Dichteprüfung in der Prüfstation repräsentativen Signalwert.

Um die Genauigkeit der Temperaturmessung zu erhöhen, wird weiter vorgeschlagen, dass die Messeinrichtung mehrere Messungen vornimmt, wie abtastet, zu unmittelbar aufeinanderfolgenden Zeitpunkten, und dass ihr eine Zeitmittelwerteinheit nachgeschaltet ist, deren Ausgangssignal als Temperaturmesswertsignal im genannten Sinne weiterverarbeitet wird, gemäss Anspruch 19.

Um im weiteren eine in jedem Fall repräsentative Messung für den Temperaturzustand des Behältnisses zu erhalten, wird gemäss Anspruch 20 vorgeschlagen, dass die Temperaturmessanordnung mehrere Sensoren umfasst, deren Ausgänge einer Mittelwerteinheit zugeführt sind, deren Ausgangssignal wiederum weiterverarbeitet wird.

Auf höchst einfache Art und Weise wird im bereits erwähnten Sinne eine für das Behältnis repräsentative Temperaturmessung gemäss Anspruch 21, dadurch vorgenommen, dass die Messeinrichtung einen Strahlungssensor umfasst, der so relativ zum Behältnis angeordnet ist, dass dessen Oeffnung in seinem Sensibilitätsbereich liegt, und es ist, bei Relativbewegung von Behältnis und Sensor, vorzugsweise ein Positionsdetektor vorgesehen, der den Sensorausgang dann als temperaturrepräsentatives Signal weiterleitet, wenn die Behältnisöffnung im Sensibilitätsbereich des Sensors liegt. Ohne grossen Mehraufwand wird dies weiter gemäss Anspruch 22 dadurch realisiert, dass der Positionsdetektor den Sensor selbst umfasst, dem eine Schwellwerteinheit nachgeschaltet ist, welch letztere den Sensorausgang dann weiterleitet, wenn das Ausgangssignal des Sensors ihren Schwellwert erreicht.

Die Erfindung wird anschliessend beispielsweise anhand von Figuren erläutert.

Es zeigen:

Fig. 1 anhand eines Blockdiagramms das erfindungsgemässe Verfahren bzw. die erfindungsgemässe Einrichtung bei quasi gleichzeitiger Temperaturmessung und Dichteprüfung,

Figur 2 in Darstellung analog zu Figur 1 eine weitere Variante des erfindungsgemässen Verfahrens bzw. der erfindungsgemässen Einrichtung,

Figur 3 eine Verstärkerschaltung zur Realisation einer Korrektureinheit wie in Figur 1 eingesetzt,

Figur 4 eine Verstärkerschaltung zur Realisation einer Korrektureinheit wie in Figur 2 eingesetzt,

Figur 5 eine weitere Ausführungsvariante des erfindungsgemässen Verfahrens bzw. der erfindungsgemässen Einrichtung anhand eines Blockdiagrammes bei zeitlicher Verschiebung von Temperaturmessung und Dichteprüfung,

Figur 6 eine weitere Ausführungsvariante an der Darstellung gemäss Figur 5 bei Voridentifikation des thermischen Behältnisverhaltens und entsprechender Direktsimulation,

Figur 7 eine weitere Ausführungsvariante an der Anordnung gemäss Figur 5 für die On-line-Bestimmung des thermischen Behältnisverhaltens,

Figur 8 anhand eines detaillierteren Blockdiagrammes eine weitere Ausführungsvariante der Anordnung gemäss Figur 5 zur on-line-Identifikation und Simulation des thermischen Behältnis-Zeitverhaltens,

Figur 9 eine erfindungsgemässe Anordnung eines Wärmesensors, wie eines pyroelektrischen Detektors, schematisch dargestellt.

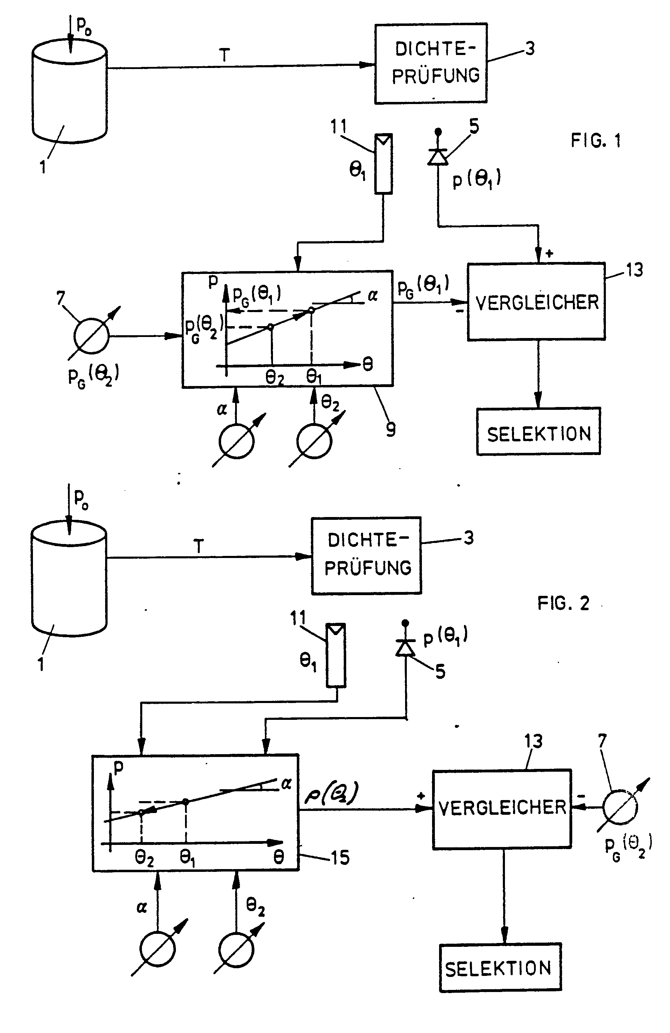

In Figur 1 ist anhand eines Blockdiagramms eine erste Variante des vorgeschlagenen Verfahrens bzw. der entsprechenden Einrichtung dargestellt. Ein auf Dichte zu prüfendes Behältnis 1 wird mit einem Prüfdruck bezüglich seiner Umgebung Po beaufschlagt. Danach wird über eine unbestimmte Zeitspanne T das Behältnis einer Dichteprüfstation 3 bekannter Bauart zugeführt. Das Resultat der Dichteprüfung im Zeitpunkt $t_1$ ist eine mit einer Sensorenanordnung 5 gemessene Druckgrösse p bei der Temperatur $\theta_1$ im Zeitabschnitt der Dichteprüfung, d.h. zur Zeit $t_1$. Die Druckgrösse p, die bei der Dichteprüfung gemessen wird, ist z.B. der nach Verstreichen der Zeitspanne T noch vorherrschende Behältnisinnendruck, beides auf den Umgebungsdruck bezogen, oder, wenn bei der Dichteprüfung das Behältnis 1 in eine Autoklave eingeführt wird, ist p, z.B. der sich dann einstellende Druck in der Autoklave. Die Technik, die angewandt wird, um die Dichteprüfung vorzunehmen, d.h., welche Druckgrösse p beobachtet wird, ist im Rahmen der vorliegenden Erfindung unwesentlich. Wesentlich ist, dass als Resultat der Dichteprüfung direkt oder indirekt eine Druckgrösse p ($\theta_1$) zur Verfügung steht.

Die gemessene Druckgrösse p ($\theta_1$) als Mass für die Leckage muss nun mit einer entsprechenden, vorgegebenen Druckgrösse $p_G$ verglichen werden, d.h. es muss festgestellt werden, ob die gemessene Druckgrösse grösser oder kleiner ist als besagte Grenz-Grösse, um zu entscheiden, ob das Behältnis als dicht oder als undicht zu bezeichnen ist.

Gemäss Figur 1 wird die Grenzdruckgrösse $p_G$, bezogen auf eine Temperatur $\theta_2$, bei welcher die Grenz-Druckgrösse $p_G$ vorgegeben wurde, abweicht. Die mit einem Temperaturmessfühler 11 gemessene Dichteprüfungstemperatur $\theta_1$ wird ebenfalls der Korrektureinheit 9 zugeführt. Letztere arbeitet grundsätzlich als Funktionsgenerator und berücksichtigt die wenigstens in erster Näherung lineare Abhängigkeit zwischen Druckgrösse p und Temperatur $\theta$, bei konstantem Volumen. Durch Eingabe der Steigung $\alpha$ und Vorgabe der Grenz-Druckgrösse $p_G$ bei der Temperatur $\theta_2$ wird die Korrekturkurve, wie schematisch eingetragen, vorgegeben, mit der durch den Füher 11 erfassten Temperatur $\theta_1$ in diese Funktion eingegangen, womit die GrenzDruckgrösse $p_G$ von ihrem Temperaturbezugswert $\theta_2$, bei Vorgabe, auf den tatsächlich bei der Dichteprüfung vorliegenden Temperaturwert $\theta_1$, wie mit dem Sensor 11 erfasst, korrigiert wird. Am Ausgang der Korrektureinheit 9 erscheint ein dem korrigierten Grenz-Druckwert $p_G (\theta_1)$ entsprechendes Signal, welches nun an einer Vergleichseinheit 13 mit der gemessenen Druckgrösse nun bezogen auf die gleichen Temepraturen $\theta_1$, verglichen wird. Aus dem Vergleichsresultat am Ausgang der Vergleichseinheit 13 wird schliesslich die Selektion vorgenommen, ob das geprüfte Behältnis 1 dicht ist oder nicht.

Anstelle einer Korrektur der vorgegebenen GrenzDruckgrösse $p_G (\theta_2)$, wie in Figur 1 schematisch dargestellt, ist es auch durchaus möglich, die gemessene Druckgrösse $p (\theta_1)$, das Resultat der Dichteprüfung im Zeitpunkt $t_1$, zu korrigieren. Hierzu wird, wie in Figur 2 schematisch dargestellt, wiederum die Temperatur $\theta_1$ im Zeitabschnitt $t_1$ der Dichteprüfung gemessen und es wird an einer Korrektureinheit 15, die wenigstens in erster Näherung lineare Abhängigkeit zwischen Druck und Temperatur bei konstantem Volumen berücksichtigend, die gemessene Druckgrösse p; gemessen bei der Temperatur $\theta_1$, auf die vorbekannte Temperatur $\theta_2$ korrigiert, bei welcher die Grenzdruckgrösse $p_G$ an der Vorgabeeinheit 7 vorgegeben wurde. Die Korrektureinheiten 9 bzw, 15 lassen sich beispielsweise in analoger Bauweise höchst einfach realisieren.

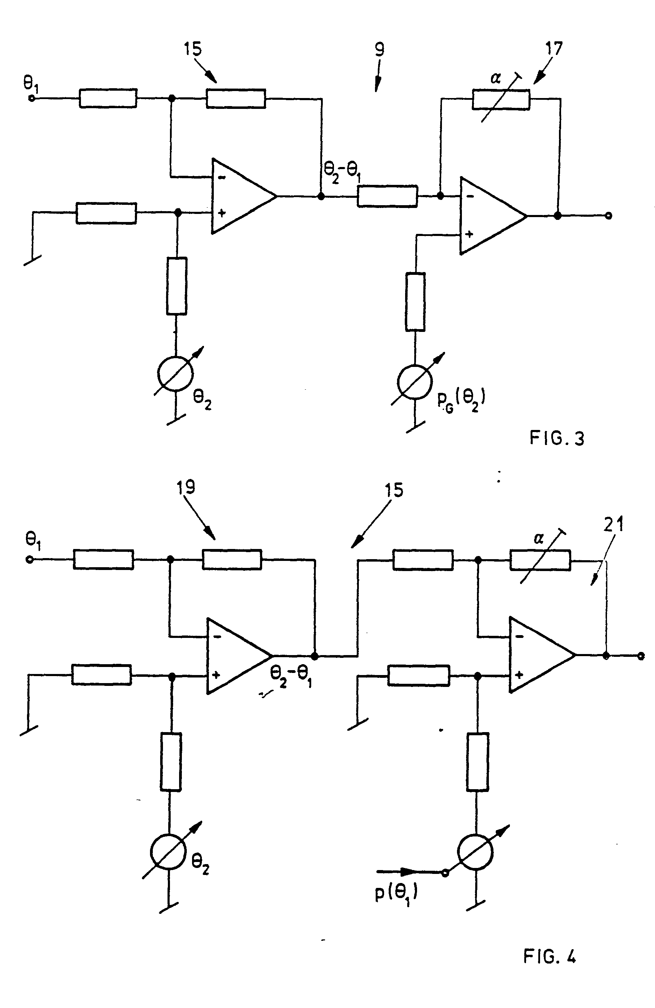

In Figur 3 ist eine einfache Schaltung zur Realisation der Korrektureinheit 9 dargestellt. Ein der Temperatur $\theta_1$ bei der Dichteprüfung entsprechendes Signal wird einem ersten Verstärker 15 zugeführt, mit Verstärkung 1, woran die Differenz dieses Signals und eines vorgegebenen, der Temperatur $\theta_2$ entsprechenden Signals, gebildet wird. Letzteres entspricht der Temperatur, bei welcher die Grenz-Druckgrösse $p_G$ vorgegeben wurde. Mit dem dieser Temperaturdifferenz $\theta_2-\theta_1$ entsprechenden Ausgangssignal wird der Eingang eines weiteren Verstärkers 17 gespiesen, dessen Verstärkung entsprechend der Charakteristiksteigung $\alpha$ eingestellt wird. Durch offsetvorgabe entsprechend der Grenz-Druckgrösse $p_G$ bei Temperatur $\theta_2$ wird die Verstärkerübertragungskennlinie so gelegt, dass sie bei Null-Temperaturdifferenz $\theta_2-\theta_1$ durch den der Grenz-Druckgrösse $p_G (\theta_2)$ entsprechenden Wert läuft, d.h. es ist dann $\theta_1 = \theta_2$ und die vorgegebene Grenz-Druckgrösse direkt mit der gemessenen Druckgrösse vergleichbar.

In Figur 4 ist analog zu Figur 3 ein möglicher Aufbau der Korrektureinheit 15 dargestellt. An einem ersten Verstärker 19 wird ein Differenzsignal entsprechend der Differenz der Temperatur $\theta_1$ bei der Dichteprüfung und der Temperatur $\theta_2$, bei welcher die Grenz-Druckgrösse $p_G$ vorgegeben wird, gebildet. Hierzu weist er eine Verstärkung von 1 auf und es wird ihm ein der Temperatur $\theta_2$ entsprechender Wert eingegeben. Das dieser Temperaturdifferenz $(\theta_2-\theta_1)$ entsprechende Ausgangssignal wird einem weiteren Verstärkerkreis 21 zugeführt, dessen Verstärkung der Charakteristiksteigung $\alpha$ entspricht. Da es hier erforderlich ist, die Charakteristik so zu legen, dass sie durch den jeweils gemessenen Druckgrössenwert p bei der Temperatur $\theta_1$ durchläuft, wird das "Offset"-Signal des Verstärkerkreises 21 durch den Ausgang des Drucksensors 5 von Figur 2 mit einem Signal entsprechend der gemessenen Druckgrösse $p (\theta_1)$ angesteuert. Somit erscheint am Ausgang des Verstärkerkreises 21 ein Signalwert, der in Funktion der gemessenen Dichteprüfungstemperatur $\theta_1$ auf einer Geraden läuft, mit der Steigung $\alpha$ und der durch den jeweilig gemessenen Druckgrössenwert $p (\theta_1)$ läuft, bei $\theta_2 = \theta_1$.

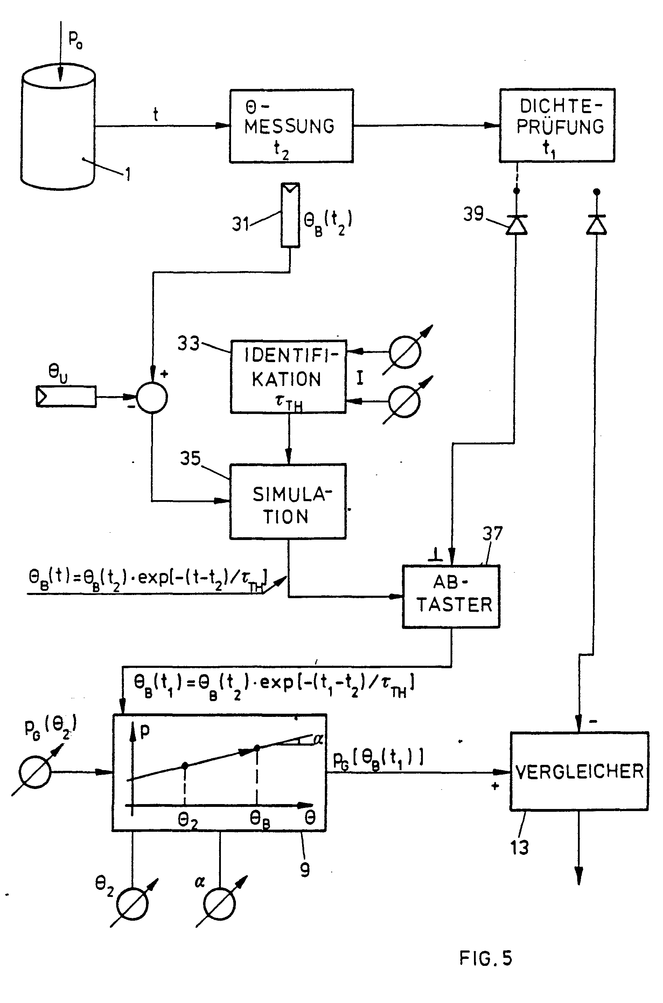

In Figur 5 ist ein von den anhand der Figur 1 und 2 prinzipiell dargestellten Verfahren abweichendes Verfahren dargestellt. Bei den Verfahren gemäss den Figuren 1 und 2 wird die Temperatur $\theta_1$ im Moment $t_1$ der Dichteprüfung gemessen bzw. in einem Zeitabschnitt vor oder nach der Dichteprüfung, der bezüglich der Rascheit thermischer Veränderungen am Behältnis irrelevant ist. Es ist nun in manchen Anwendungsfällen und abhängig von der für die Dichteprüfung angewandten Technik oft anzustreben, die Temperaturmessung und die Dichteprüfung zeitlich bzw. örtlich zu trennen. Wird dies vorgenommen, so ergibt die Temperaturmessung am Behältnis nicht diejenige Temperatur, die bei der Dichteprüfung des Behältnisses vorherrscht. Es muss somit unter Berücksichtigung der Zeitspanne zwischen Temperaturmessung und Dichteprüfung grundsätzlich aus der Temperaturmessung am Anfang oder am Ende dieser Zeitspanne auf die Behältnistemperatur am Ende bzw. am Anfang dieser Zeitspanne, d.h. bei der Dichteprüfung geschlossen werden.

Das hierzu eingeschlagene Vorgehen ist in Figur 5 dargestellt. Wiederum wird das Behältnis 1 mit einer prüfdruckgrösse Po beaufschlagt. Danach, nach einer beliebigen Zeitspanne, wird im Zeitpunkt $t_2$ die Behältnistemperatur $\theta_B(t_2)$ mit einer Temperaturmessvorrichtung 31 gemessen, bezogen auf die Ausgangstemperatur $\theta_a$. An einer Identifikationseinheit 33 wird grundsätzlich das thermische Verhalten des Behältnisses identifiziert oder berechnet, d.h. insbesondere dessen thermische Zeitkonstante $\tau_{TH}$. Hierzu sind an der Identifikationseinheit 33 in noch zu beschreibender Art und Weise Eingangsgrössen I einzugeben. Ist das thermische Verhalten mit der thermischen Zeitkonstanten $\tau_{TH}$ gegeben, so wird diese Grösse zusammen mit der gemessenen Behältnistemperatur $\theta_B(t_2)$ einer Simulationseinheit 35 eingegeben. Durch Bekanntsein des Temperaturzustandes entsprechend $\theta_B$ im Zeitpunkt $t_2$ und der

thermischen Zeitkonstanten $\tau_{TH}$ bildet die Simulationseinheit 35 in der Zeit die elektrische Simulation des thermischen Behältnisverhaltens, d.h. die Funktion:

$$(1) \quad \theta_B (t) = \theta_B (t_2) \exp \{-(t-t_2)/\tau_{TH}\}$$

Im dargestellten Beispiel liegt der Zeitpunkt der Temperaturmessung $t_2$ vor dem Zeitpunkt $t_1$ der Dichteprüfung. Somit kann die Simulation durch Realisation einer exponentiell mit der thermischen Zeitkonstanten $\tau_{TH}$ abfallenden Funktion bewerkstelligt werden, die mit dem Anfangswert entsprechend $\theta_B(t_2)$ bzw. $\theta_B(t_2)-\theta_u$ angeregt wird. Der der Behältnistemperatur bei der Dichteprüfung im Zeitpunkt $t_1$ entsprechende Temperaturwert $\theta_B(t_1)$ wird durch Abtasten bzw. Abfragen des Ausgangssignals der Simulationseinheit 35 im Dichteprüfungszeitpunkt $t_1$ ermittelt. Dies wird durch die Abtasteinheit 37 realisiert, die, ausgelöst durch einen Sensor 39, der das Stattfinden der Dichteprüfung detektiert, dann den Ausgang der Simulationseinheit 35 abfrägt. Somit erscheint am Ausgang der Abtasteinheit 37 ein Signal entsprechend:

$$(2) \quad \theta_B (t_1) = \theta_B (t_2) \exp \{-(t_1-t_2)/\tau_{TH}\}$$

Somit wird aus einer vorgängigen Temperaturmessung im Zeitpunkt $t_2$ die Behältnistemperatur $\theta_B(t_1)$ bei der nachmaligen Dichteprüfung bestimmt. Mit diesem der Temperatur entsprechenden Signal wird in Analogie zu den Ausführungen zu Figur 1 oder Figur 2, in Figur 5 in Analogie zu Figur 1 dargestellt, in die Korrektureinheit 9 eingegangen, an deren Ausgang die entsprechend der Temperaturdifferenz von Behältnistemperatur $\theta_B(t_1)$ bei Dichteprüfung und der Temperatur $(\theta2)$, bei der Grenz-Druckgrössen-Vorgabe korrigierte GrenzDruckgrösse $p_G(\theta_B(t_1))$ erscheint. Dieser Wert wird wiederum der Vergleichseinheit 13 zugeführt, zusammen mit der gemessenen, für die Dichteprüfung relevanten Druckgrösse $p(\theta_B(t_1))$, das Resultat des Vergleichs führt zur Selektion, ob das geprüfte Behältnis den Dichteanforderungen genügt oder nicht.

Grundsätzlich ist es auch möglich, die Temperaturmessung nach der Dichteprüfung vorzunehmen und in analoger Weise die gemessene Druckgrösse oder die vorgegebene Grenz-Druckgrösse zu korrigieren, wobei dann die das thermische Behältnisverhalten simulierende Zeitfunktion rückwärts ausgewertet werden muss, was nicht mehr durch Direktsimulation in der Zeit erfolgen kann, sondern was nun rechnerisch erfolgen muss.

Für die Identifikation des thermischen Behältnisverhaltens ist es ausschlaggebend, die thermische Zeitkonstante $\tau_{TH}$ zu finden bzw. zu kennen. Dies kann auf verschiedene Art und Weise erfolgen.

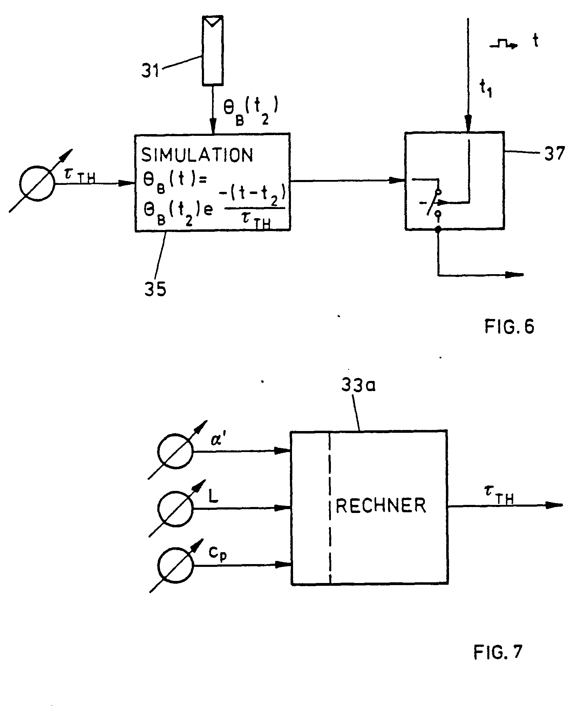

Gemäss Fig. 6 wird in einer ersten Variante hierzu eine eigentliche Identifikation im Rahmen des beschriebenen Verfahrens ausgelassen. Hier wird das thermische Verhalten des Behältnisses vorab an einem Prüfbehältnis ausgemessen und daraus die thermische Zeitkonstante $\tau_{TH}$ bestimmt. Diese Grösse wird dann direkt der Simulationseinheit 35 eingegeben.

Gemäss Figur 7 kann anstelle einer experimentellen Bestimmung der thermischen Zeitkonstanten $\tau_{TH}$ des Prüflings bzw. Behältnisses 1 letztere rechnerisch bestimmt werden. Dies hat den Vorteil, dass die unter Umständen langwierige experimentelle Bestimmung der Zeitkonstanten $\tau_{TH}$ wegfällt.

Allerdings müssen hierzu die mindestens in erster Näherung die thermische Zeitkonstante $\tau_{TH}$ festlegenden Grössen bekannt sein, d.h. Wärmeübergangszahl $\alpha'$, spezifische Wärme $c_p$, Dimension L des Behältnisses. Diese die Zeitkonstante bestimmenden Parameter des Behältnisses 1 und allenfalls seines Füllmediums werden in die nun als Recheneinheit ausgebildete Identifikationseinheit $33_a$ eingegeben — Eingänge I von Figur 5 — die daraus die thermische Zeitkonstante $\tau_{TH}$ ermittelt. Diese wird, wie in Figur 5 dargestellt, wiederum der Simulationseinheit 35 zugeführt. Es versteht sich von selbst, dass falls die Identifikation auf die hier beschriebene Art und Weise rechnerisch erfolgt, auch die Simulation rechnerisch erfolgen wird, ein Vorgehen, das sich unter Einsatz bekannter Mikroprozessorentechnik, unter Berücksichtigung der Tatsache, dass mit denselben Rechenbausteinen noch weitere Steuer-, Ueberwachungsund allenfalls Regelfunktionen ausgeführt werden können, in vielen Fällen aufdrängen wird.

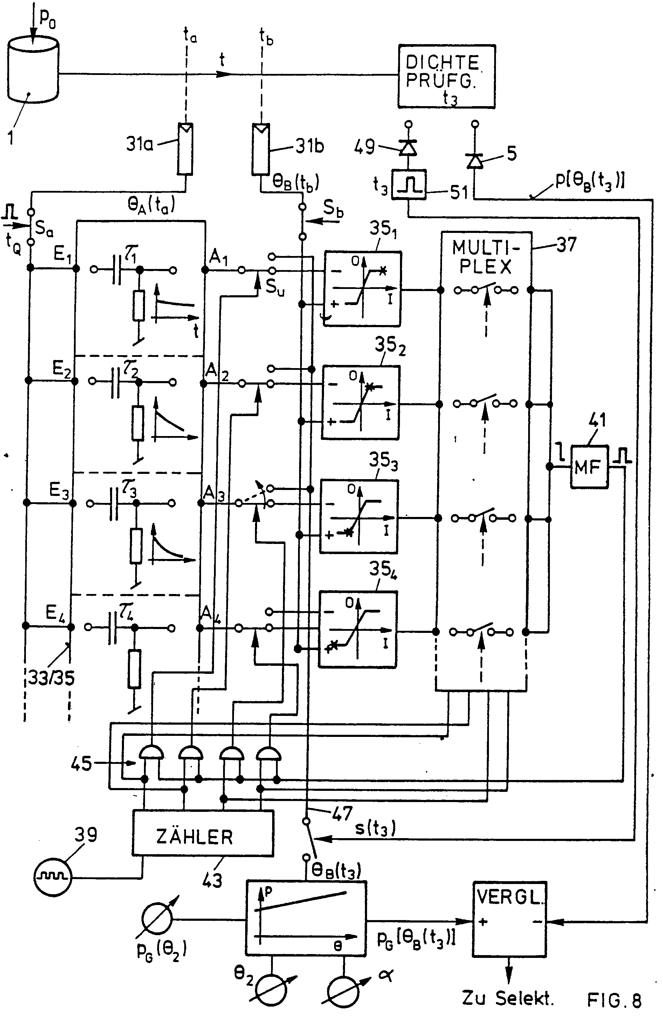

In Figur 8 ist auf einfache analoge Art und Weise dargestellt, wie eine "One line"-Identifikation und Simulation für jeden zu prüfenden Behälter vorgenommen werden kann. Dabei ist zu berücksichtigen, dass die thermischen Zeitkonstanten $\tau_{TH}$ nur in beschränktem Bereich von Behälter zu Behälter oder gar von Behältertyp zu Behältertyp differieren.

Grundsätzlich werden hier bei der Temperaturmessung zwei Messungen vorgenommen, sei dies mit ein und demselben Detektor durch sukzessives Abtasten oder durch zwei gestaffelt, entlang einer Bewegungsbahn eines zu prüfenden Behältnisses 1 angebrachte Sensoren. Aus Uebersichtsgründen ist in Figur 8 letzterwähnte Variante dargestellt. Das Behältnis 1 läuft auf seiner Fortbewegungsbahn, nachdem es mit Prüfdruck $p_0$ beaufschlagt worden ist, erst an einer ersten Temperatursensoranordnung 31a vorbei. Diese misst die Behältnistemperatur $\theta_B$ im Zeitpunkt $t_a$. Das Ausgangssignal dieser Messanordnung $31_a$ wird einer Identifikations- und Simulationseinheit 33, 35 aufgeschaltet. Letztere umfasst eine Mehrzahl von Kanälen 1 bis 4 etc. zwischen Eingängen $E_1$ und Ausgängen $A_1$, $E_2$ und $A_2$ etc. Der Ausgang der Anordnung $31_a$ wird im Zeitpunkt, zu welchem das Behältnis 1 ausgemessen wird, auf die Eingänge E der Identifikations- und Simulationseinheit 33, 35 aufgeschaltet. Ein Schalter Sa stellt schematisch dar, dass der Ausgang der Messanordnung $31_a$ im Zeitpunkt $t_a$ auf besagte Eingänge E aufgeschaltet wird. Die Kanäle weisen je einen Funktionsgenerator auf. Wie dargestellt, sind letztere höchst einfach aufgebaut und umfassen unter anderem je ein Netzwerk mit Hochpass-Charakteristik, beispielsweise, wie dargestellt, RC-Glieder. Jeder der Kanäle bzw. die ihm zugeordneten Funktionsgeneratoren sind fest auf gestaffelte Zeitkonstanten $\tau_1$, $\tau_2$ etc. abgestimmt. Bei Anlegen des Ausgangssignals der Anordnung $31_a$ an alle Kanäle erscheinen an den Kanalausgängen A Funktionsverläufe entsprechend abfallender Exponentialfunktionen mit den kanalspezifischen Zeitkonstanten $\tau$ und dem Anfangswert entsprechend dem Ausgangssignal der Anordnung $31_a$ zur Zeit $t_a$. Nach einer Zeitspanne, die nicht bekannt zu sein braucht und von der Vorschubgeschwindigkeit des Behältnisses abhängig, läuft das Behältnis 1 an einer zweiten Temperaturmessanordnung $31_b$ vorbei, deren Ausgangssignal, wie mit dem Schalter $S_b$ schematisch dargestellt, dann auf eine Anzahl von Komparatoren $35_1$, $35_2$, etc. aufgeschaltet wird, wobei jedem der Komparatoren 35 an einem zweiten Eingang das Ausgangssignal eines der Kanäle aufgeschaltet ist. Somit vergleicht jeder der Komparatoren 35 ein Signal, entsprechend der Behältnistemperatur im Zeitpunkt $t_b$ mit einem Kanalausgangssignal im gleichen Zeitpunkt. Sind nun die Zeitkonstanten der Kanäle $\tau$, wie erwähnt, sukzessive gestaffelt, beispielsweise $\tau_1 < \tau_2 < \tau_3 < \tau_4$ etc., so sind die Kanalausgangssignale dementsprechend unterschiedlich stark abgefallen. Somit wird der Vergleich an den Komparatoren zeigen, welcher Kanalausgangswert dem Ausgangssignal der Temperaturmessanordnung $31_b$ am genausten entspricht. Bei Ueberprüfung aller Komparatorausgänge wird ein Komparatorpaar gefunden werden, deren Ausgangssignale auf unterschiedlichen polaritäten liegen. Dies ist beim dargestellten Beispiel zwischen den Komparatoren $35_2$ und $35_3$ der Fall, indem mit * in den dargestellten Komparator-Charakteristiken deren Ausgangssignal angedeutet ist. Die Abfrage der Komparatorausgangssignale erfolgt mittels einer Multiplexereinheit 37. Getaktet durch einen Taktgenerator 39, schaltet die Multiplexereinheit 37 sequentiell einen Komparatorausgang nach dem anderen auf eine monostabile Einheit 41. Wird ein Polaritätswechsel zwischen zwei sequentiell aufgeschalteten Komparatorausgängen detektiert, so ergibt dies am Ausgang der Multiplexereinheit 37 eine Signalflanke, durch welche die monostabile Einheit 41 ausgelöst wird und einen Ausgangsimpuls abgibt.

Gleichzeitig mit dem Takten der Multiplexereinheit 37 werden die Taktimpulse des Generators 39 auf eine Zählereinheit 43 gegeben, welche die Impulse zählt und somit identifziert, welcher der Komparatorausgänge jeweils durch die Multiplexereinheit 37 durchgeschaltet ist. Erscheint am Ausgang der monostabilen Einheit 41 der erwähnte Impuls, so wird (nicht dargestellt) der Zähler 43 stillgesetzt. Den Kanälen ist je ein Zählstand am Zähler 43 zugeordnet. Die Ausgänge der Identifikations- und Simulationseinheit 33, 35, A, sind über Umschalter $S_U$ mit den zugeordneten Komparatoren 35 verbunden. Diese Umschalter $S_U$ werden geöffnet, wenn der Zählstand an der Zählereinheit 43 dem kanalspezifischen Zählstand entspricht und gleichzeitig die monostabile Einheit 41 einen Impuls abgibt, was besagt, dass derjenige Kanal, bei dem dies zutrifft, dem thermischen Verhalten des Behältnisses am genauesten entspricht. Somit wird mit Erscheinen des Impulses am Ausgang der Einheit 41 über eine Decodierungseinheit 45 der entsprechende Umschalter $S_U$ des entsprechenden Kanals umgeschaltet, im dargestellten Fall somit der Umschalter $S_U$ am Kanal 3. Er schaltet das Ausgangssignal der Identifikations- und Simulationseinheit auf eine Leitung 47 um, an welcher nun ein Signal anliegt, das in der Zeit dem thermischen Verhalten des Behältnisses 1 entspricht. Erreicht nun das Behältnis 1 die Dichteprüfeinrichtung im Zeitpunkt $t_3$, so wird dies, z.B. mit einem Positionsschalter 49 registriert, der dann einen Auslöseimpuls, wie über eine monostabile Einheit 51, abgibt. Dieser Impuls schliesst einen Schalter $S(t_3)$ und schaltet die Leitung 47 auf die bereits anhand von Figur 1 beschriebene Korrektureinheit 9 auf. Dieses dann aufgeschaltete Signal entspricht der Behältnistemperatur $\theta_B$ im Zeitpunkt $t_3$, d.h. in dem für die Dichteprüfung signifikanten Zeitpunkt. Wie bereits beschrieben wurde, wird an der Korrektureinheit 9, hier nicht mehr dargestellt, bei $\theta_2$ vorgegebene Grenz-Druckgrösse $p_G$ gemäss Figur 1 auf den relevanten Behältnistemperaturwert $t_1$ korrigiert, die korrigierte Grenz-Druckgrösse $p_G(\theta_B(t_3))$ wird, wie bereits beschrieben wurde, zusammen mit der gemessenen, dichterelevanten Druckgrösse $p(\theta_B(t_3))$ von Sensor 5, der Vergleichseinheit 13 zugeführt.

Somit wird bei dieser Schaltungsanordnung mit den Kanälen spezifischer Zeitkonstanten, das thermische Verhalten des Behältnisses indentifiziert und simuliert. Es versteht sich von selbst, dass die Identifikation auch durch Messung der Behältnistemperatur in zwei Zeitpunkten entsprechend $t_a$ und $t_b$ erfolgen kann und die Identifikation durch Inbeziehungsetzen der gemessenen Temperaturwerte, wie durch Quotientenbildung, erfolgen kann, aus welcher die Zeitkonstante resultiert. Ist die Zeitkonstante $\tau_{TH}$ gegeben, so erfolgt dann die Simulation durch Nachbildung einer Exponentialfunktion mit einer der Messwerte entsprechenden Anregung und der gefundenen Zeitkonstanten entsprechendem Abklingverhalten. Auch hier wird dann zu dem für die Dichteprüfung relevanten Zeitpunkt die simulierte Zeitfunktion abgefragt, um daraus die Behältnistemperatur bei der Dichteübung zu ermitteln. Es versteht sich von selbst, dass, falls die Druckgrössen nicht direkt gemessen werden, sondern indirekt durch Messung physikalischer Grössen, die in bekannter Art und Weise vom Druck abhängen, die Korrekturen auch an den tatsächlich gemessenen Grössen erfolgen können, bei Berücksichtigung ihrer Abhängigkeit vom Druck bzw. von der Temperatur.

Um die Genauigkeit der jeweiligen Temperaturmessungen an den Temperaturmessanordnungen 11 bzw. 31 zu erhöhen, werden letztere über vorgegebene Zeitabschnitte vorgenommen und der Temperaturmittelwert über diese Zeitabschnitte als relevanter Messwert weiterverarbeitet. Dies kann in bekannter Art und Weise durch Integration der Temperaturausgangssignale der entsprechenden Anordnungen über eine vorgegebene Integrationszeit erfolgen, wie durch einen analogen Integrator oder durch relativ hochfrequentes Abtasten der Temperaturausgangssignale und anschliessende digitale Mittelwertsbildung über eine vorgegebene Anzahl abgetasteter Signalwerte.

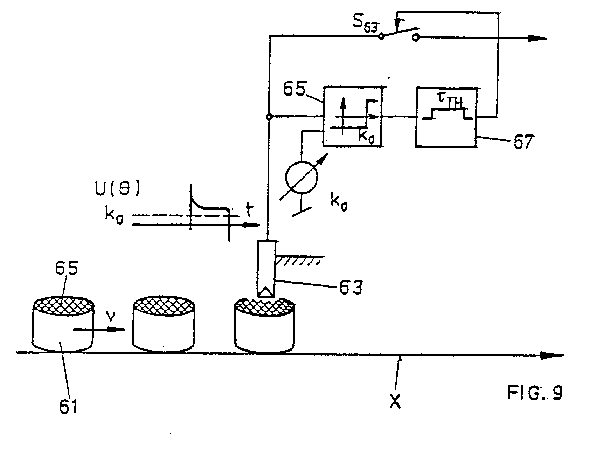

Im weiteren besteht ein Problem bei der Temperaturmessung darin, dass es schwierig ist, eine für den Temperaturzustand der Behältnisse relevante Messung vorzunehmen, unter Berücksichtigung, dass die Behältnistemperatur an unterschiedlichen Behältnisstellen mitnichten gleich zu sein braucht. Dies wird dadurch berücksichtigt, dass mehrere Temperaturfühler die Temperatur eines Behältnisses gleichzeitig abtasten und als relevanter Behältnistemperaturwert der Mittelwert der Temperaturwerte aller Sensoren ermittelt wird. Der hierzu zu betreibende Aufwand, insbesondere durch das Vorsehen mehrerer Temperatursensoren, ist relativ gross. Dabei muss berücksichtigt werden, dass in den meisten Anwendungsfällen die zu prüfenden Behältnisse nicht stationär sind bezüglich eines Bezugssystems mit den Messanordnungen, sondern bei Durchlaufproduktion mit relativ hoher Geschwindigkeit auf einer Bahn, entlang welcher die Temperatursensoren anzuordnen sind, vorbeilaufen. Eine bevorzugte Anordnung eines Temperaturfühlers, wie eines pyroelektrischen Detektors, ist in Figur 9 dargestellt. Entlang einer Bewegungsbahn X laufen mit der Geschwindigkeit v Behältnisse 61, die noch nicht verschlossen sind. Ein pyroelektrischer Detektor 63 ist im Bereich der Behältnisbewegungsbahn X so fixiert, dass die Behältnisöffnungen 65 an ihm vorbeilaufen. Es wurde nun gefunden, dass die thermische Strahlung im Innern des Behältnisses 61 repräsentativ ist für den Mittelwert der Temperaturverteilung entlang des ganzen Behältnisses. Somit wird die Temperatur dann gemessen, wenn ein jeweiliges Behältnis 61 mit seiner Oeffnung 65 im Bereich der Sensibilitäts-Charakteristik des pyroelektrischen Detektors 63 liegt. Wann dies der Fall ist, kann durch einen separaten Positionsdetektor detektiert werden. Wesentlich einfacher ist es jedoch auszunützen, dass, wie mit einer schematisch dargestellten Ausgangssignalfunktion U (θ) des Detektors 63 dargestellt, dessen Ausgangssignal sich dann, wenn eine Lücke zwischen den Behältnissen 61 am Detektor 63 vorbeiläuft, weitgehend unabhängig von der Umgebungstemperatur vom Ausgangssignal unterscheidet, wenn der Detektor 63 einer Behältnisöffnung 65 gegenüberliegt. Somit wird das Ausgangssignal des Detektors 63 erst auf eine Komparatoreinheit 65 geschaltet, welcher ein Schwellwert $k_o$ vorgegeben wird, wobei letzterer so gewählt wird, dass das Ausgangssignal des Detektors 63 ihn nur überschreitet, wenn eine Oeffnung 65 in seine Sensibilitäts-Charakteristik einläuft. Mit dem Ausgang des Komparators 65 wird beispielsweise über eine monostabile Einheit 67 oder über eine bistabile, die bei nachmaligem Wiederunterschreiten des Schwellwertes $k_o$ rückgesetzt wird, ein Schalter $S_{63}$ geschlossen, welcher das Ausgangssignal des Detektors 63 als dann repräsentativ für die jeweilige Behältnistemperatur weiterschaltet, auf die anhand Figur 1 bis 8 dargestellten, den Temperaturmessanordnungen nachgeschalteten Einrichtungen. Dieses Prinzip lässt sich abrückend vom spezifischen Einsatz zur Messung von Behältnistemperaturen in vielen anderen Technologien anwenden, wie bei der Bestimmung relevanter gemittelter Temperaturen von Körpern generell, wie schematisch in Figur 10 dargestellt. Soll an einem Körper 70 eine für seinen Temperaturzustand bzw. seinen thermischen Energieinhalt relevante Temperatur gemessen werden, wobei im allgemeinen Fall die Temperaturverteilung im Körper 70 dreidimensional unausgeglichen ist, so wird in den Körper eine Einformung 72 eingearbeitet und die Wärmestrahlung $S_{TH}$ aus der, einen schwarzen Körper ähnlich wirkenden, Einformung 72 mit einem Detektor 74, wie mit einem pyroelektrischen Detektor, der im unmittelbaren Bereich der Einnehmung 72 angebracht wird, gemessen. Damit erübrigt sich des öftern eine sehr aufwendige Innenmessung der Temperatur an derartigen Körpern.

Mit der vorgeschlagenen Temperaturberücksichtigung bei der Dichteprüfung von Behältnissen wird eine wesentliche Fehlergrösse bei bereits bekannten sehr genauen Dichteprüfungstechniken eliminiert, womit die Genauigkeit der entsprechenden Systeme erst voll ausgenützt werden kann.

**Patentansprüche**

1. Verfahren zur Dichteprüfung von Behältnissen, bei dem man ein Behältnis (1) unter Druck ($p_o$) setzt oder evakuiert und eine Druckgrösse misst, als Leckagemass-Indikation, und wobei man eine Grenzdruckgrösse ($p_G$) für den Entscheid, ob ein Behältnis als dicht oder als undicht gewertet wird, vorgibt und man weiter, zeitlich von der Messung der Druckgrösse (p) verschoben, eine für die dann vorherrschende Behältnistemperatur ($\theta_B$) signifikante Grösse misst und eine davon abgeleitete Grösse als Korrektur der gemessenen Druckgrösse einsetzt, dadurch gekennzeichnet, dass man die Druckgrösse in einer Druckprüfstation (3), die Temperatur oder Wärmestrahlung des Behältnisses hingegen entfernt von der Prüfstation (3) misst, und das Behältnis (1) dabei in die Prüfstation (3) bewegt oder von der Prüfstation hin zur Messung der Temperatur oder Wärmestrahlung, und aus der gemessenen Temperatur ($\theta_B$) oder Wärmestrahlung und der Zeitspanne ($t_1$—$t_2$) zwischen Druckgrössenmessung in der Prüfstation (3) und Temperatur bzw. Wärmestrahlungsmessung, die gennanten Korrektur ermittelt.

2. Verfahren nach Anspruch 1, dadurch gekennzeichnet, dass man die Korrektur an der Grenzdruckgrösse ($p_G$) oder an der gemessenen Druckgrösse (p) vornimmt.

3. Verfahren nach einem der Ansprüche 1 oder 2, dadurch gekennzeichnet, dass man das thermische Zeitverhalten des Behältnisses (1) bestimmt und daraus, der gemessenen Temperatur ($\theta_B(t_2)$) oder

Wärmestrahlung sowie der genannten Zeitspanne ($t_1-t_2$) , die Temperatur des Behältnisses ($\theta_B(t_1)$) bei Messung der Druckgrösse (p) bestimmt.

4. Verfahren nach einem der Ansprüche 1 bis 3, dadurch gekennzeichnet, dass man die Temperatur des Behältnisses ($\theta_B(t_1)$ bei Messung der Druckgrösse (p) berücksichtigt und für die Korrektur die Temperaturabhängigkeit der Grenzdruckgrösse ($p_G(\theta_B)$) oder der gemessenen Druckgrösse (p) berücksichtigt.

5. Verfahren nach Anspruch 4, dadurch gekennzeichnet, dass man die Temperaturabhängigkeit der Grenzdruckgrösse oder der gemessenen Druckgrösse in Funktion der unabhängigen Variablen "Temperatur" abspeichert und mit der bestimmten Temperatur des Behältnisses bei Messung der Druckgrösse (p) in die Funktion eingeht.

6. Verfahren nach Anspruch 3, dadurch gekennzeichnet, dass man das thermische Zeitverhalten des Behältnisses aus Messung mindestens einer Behältnistemperatur ($\theta_B$) sowie rechnerischer Vorbestimmung der thermischen Behältnis-Zeitkonstanten ($\tau_{TH}$), unter Berücksichtigung von die Zeitkonstante festlegenden Behältnis- und/oder Füllmediumsparametern ($a'$, L, $c_p$) bestimmt.

7. Verfahren nach Anspruch 3, dadurch gekennzeichnet, dass man das thermische Zeitverhalten des Behältnisses experimentell bestimmt.

8. Verfahren nach Anspruch 3, dadurch gekennzeichnet, dass man das thermische Zeitverhalten des Behältnisses aus zeitverschobenen Messungen von Behältnistemperaturen ($\theta_B(t_a)$, $\theta_B(t_b)$) identifiziert, unter Berücksichtigung des Messungszeitabstandes.

9. Verfahren nach einem der Ansprüche 1 bis 7, dadurch gekennzeichnet, dass die Temperaturmessung durch Mittelung mehrerer Messungen über eine Messzeit durchgeführt wird.

10. Verfahren nach einem der Ansprüche 1 bis 9, dadurch gekennzeichnet, dass man die Temperaturmessung durch Mittelung mehrerer Messungen an unterschiedlichen Behältnisstellen durchführt.

11. Verfahren nach einem der Ansprüche 1 bis 10, dadurch gekennzeichnet, dass man vor der Druckgrössenmessung und vor einem Schliessen des Behältnisses, durch Messung der thermischen Strahlung aus dem Behältnishohlraum, als Messung des integralen thermischen Energiezustandes, die Wärme-Strahlungsmessung vornimmt.

12. Verfahren nach Anspruch 11, dadurch gekennzeichnet, dass man bei Relativbewegung von Behältnis und Strahlungsmessanordnung (63), eine Aenderung der detektierten Strahlung bei Einlaufen der Behältnisöffnung (65) in den Sensibilitätsbereich der Strahlungsmessanordnung (63) als Kriterium dafür verwendet, wann diese Anordnung repräsentativ misst.

13. Dichteprüfeinrichtung für Behältnisse mit einer Prüfstation (3), worin eine für eine Behältnisleckage signifikante Druckgrösse (p) gemessen wird, sowie mit einer Messeinrichtung für eine für die Behältnistemperatur ($\theta_B$) signifikante Grösse, wobei die gemessene Druckgrösse, unter Berücksichtigung der für die Behältnistemperatur signifikanten Grösse mit einer Grenzdruckgrösse verglichen (13) wird, für einen Entscheid, ob ein Behältnis dicht oder undicht ist, dadurch gekennzeichnet, dass die Messeinrichtung (31) für die signifikante Grösse eine von der Prüfstation (3) entfernt angeordnete Temperatur- oder Wärmestrahlungsmesseinrichtung (31, 63) ist.

14. Einrichtung nach Anspruch 13, dadurch gekennzeichnet, dass die Messeinrichtung ausgangsseitig mit einem Eingang einer Korrektureinheit (9, 15) verbunden ist, an deren Ausgang ein Signal in Abhängigkeit des Signals am Eingang erscheint, wobei vorzugsweise der Ausgang der Korrektureinheit (9, 15) auf einen Eingang einer Vergleichseinheit (13) geführt ist, mit einem zweiten Eingang, welch letzterem ein weiteres Signal zugeführt wird, das der gemessenen, für die Behältnisleckage repräsentativen Druckgrösse (p) entspricht.

15. Einrichtung nach Anspruch 14, dadurch gekennzeichnet, dass die Korrektureinheit (9, 15) eine Recheneinheit umfasst.

16. Einrichtung nach Anspruch 14, dadurch gekennzeichnet, dass ein Ausgang der Messeinrichtung (31) auf einen Eingang einer Zeitfunktionseinheit (35) geführt ist, dass ein Schaltorgang (39) vorgesehen ist, welches die Vornahme der Dichteprüfung anzeigt, wobei das Schaltorgan (39) dann das Auslesen des Ausgangssignals der Zeitfunktionseinheit ansteuert (37) und das Ausgangssignal der Zeitfunktionseinheit (35), der Behältnistemperatur bei Auslösen des Schaltorgans (39) entsprechend, auf den Eingang der Korrektureinheit (9) geführt ist.

17. Einrichtung nach Anspruch 16, dadurch gekennzeichnet, dass die Zeitfunktionseinheit eine Recheneinheit ($33_a$) umfasst mit einer Eingabeeinrichtung zur Eingabe von Behältnis- und Füllmediums-Parametern ($a'$, L, cp), und dass sie die thermische Zeitkonstante ($\tau_{TH}$) des Behältnisses berechnet und vorzugsweise, mindestens bei Auslösen des Schaltorgans (39), aus dem Signal am Eingang der Zeitfunktionseinheit als Anfangswert und, die Zeitkonstante ($\tau_{TH}$), den Wert einer Zeitfunktion im Zeitpunkt des Auslösens des Schaltorgans berechnet und ausgibt.

18. Einrichtung nach Anspruch 16, dadurch gekennzeichnet, dass die Messeinrichtung (31a, b) zu mindestens zwei Zeitpunkten ($t_a$, $t_b$) einen Messwert ($\theta_B(t_a)$, $\theta_B(t_b)$) ausgibt, und dass die Zeitfunktionseinheit (33, 35) aus den Messwerten und der Zeitdifferenz ihres Auftretens ($t_1-t_2$), das thermische Zeitverhalten des Behältnisses identifiziert, insbesondere dessen Zeitkonstante ($\tau_{TH}$) und dieses Verhalten mit mindestens einem Temperatur-Messwert ($\theta_B(t_a)$) als Stützwert simuliert, und dass ein Ausgang der Zeitfunktionseinheit, durch das Schaltorgan (39) auf die Korrektureinheit (a) geschaltet wird, mit einem

# EP 0 217 833 B1

dann für die Behältnistemperatur bei der Dichteprüfung in der Prüfstation repräsentativen Signal-Wert.

19. Einrichtung nach einem der Ansprüche 13 bis 18, dadurch gekennzeichnet, dass die Messeinrichtung (31, 63) sequentiell mehrere Messungen vornimmt und ihr eine Zeitmittelwertseinheit nachgeschaltet ist.

20. Einrichtung nach einem der Ansprüche 13 bis 19, dadurch gekennzeichnet, dass die Temperaturmessanordnung mehrere Temperatursensoren umfasst, deren Ausgänge einer Mittelwertseinheit zugeführt sind.

21. Einrichtung nach einem der Ansprüche 13 bis 20, dadurch gekennzeichnet, dass die Messeinrichtung mindestens einen Strahlungssensor (63) umfasst, der so relativ zum Behältnis (X) angeordnet ist, dass dessen Oeffnung (65) in seinem Sensibilitätsbereich liegt, und dass vorzugsweise ein Positionsdetektor (65) vorgesehen ist, der den Sensorausgang dann als temperaturrepräsentatives Signal weiterleitet, wenn die Behältnisöffnung (65) im Sensibilitätsbereich des Sensors liegt.

22. Einrichtung nach Anspruch 21, dadurch gekennzeichnet, dass der Positionsdetektor durch den Sensor (63) selbst gebildet ist, dem eine Schwellwerteinheit (65) nachgeschaltet ist, die den Sensorausgang dann weiterleitet ($S_{63}$), wenn das Sensorausgangssignal ihren Schwellwert ($K_o$) erreicht.

## Revendications

1. Procédé de contrôle d'étanchéité de récipients, dans lequel on met un récipient (1) sous pression ($p_0$) ou sous vide et on mesure une valeur de la pression comme indication de l'ampleur d'une fuite, et dans lequel on prescrit une valeur limite de pression ($p_G$) pour décider si un récipient doit être considéré comme étanche ou non étanche, et on mesure, avec un décalage dans le temps par rapport à la mesure de la valeur (p) de la pression, une valeur significative de la température ($\theta_B$) du récipient et on utilise une valeur qui en dérive, pour la correction de la valeur mesurée de la pression, caractérisé par le fait que l'on mesure la valeur de la pression dans une station (3) de contrôle par pression et que par contre on mesure la température ou le rayonnement thermique du récipient en un point éloigné de la station de contrôle (3), et par le fait que l'on déplace le récipient (1) dans la station de contrôle (3) ou bien, depuis la station de contrôle pour la mesure de la température ou du rayonnement thermique, et qu'à partir de la température mesurée ($\theta_B$) ou du rayonnement thermique mesuré et de l'intervalle de temps ($t_1—t_2$) qui s'écoule entre la mesure de la valeur de pression dans la station de contrôle (3) et la mesure de la température ou du rayonnement thermique, on établit la correction mentionnée.

2. Procédé selon la revendication 1, caractérisé en ce que l'on procède à la correction sur la valeur limite ($p_G$) de la pression ou sur la valeur mesurée (p) de la pression.

3. Procédé selon l'une des revendications 1 ou 2, caractérisé par le fait que l'on détermine le comportement thermique, dans le temps, du récipient (1) et qu'à partir de ce comportement, de la température ($\theta_B(t_2)$) ou du rayonnement thermique mesuré ainsi que de l'intervalle de temps ($t_1—t_2$) mentionné, on détermine la température du récipient ($\theta_B(t_1)$) lors de la mesure de la valeur (p) de la pression.

4. Procédé selon l'une des revendications 1 à 3, caractérisé par le fait que l'on prend en compte la température du récipient ($\theta_B(t_1)$) lors de la mesure de la valeur (p) de la pression et que, pour la correction, on prend en compte la dépendance vis-à-vis de la température, de la valeur limite ($p_G(\theta_B)$) de la pression ou de la valeur mesurée (p) de la pression.

5. Procédé selon la revendication 4, caractérisé par le fait que l'on mémorise, en tant que fonction de la variable indépendante "température", la relation de dépendance de la valeur limite de la pression ou de la valeur mesurée de la pression, vis-à-vis de la température, et que l'on entre avec la température déterminée du récipient lors de la mesure de la valeur de la pression (p) dans cette relation.

6. Procédé selon la revendication 3, caractérisé par le fait que l'on détermine le comportement thermique, dans le temps, du récipient à partir de la mesure d'au moins une température du récipient ($\theta_B$) ainsi qu'à partir d'une prédétermination, par le calcul, de la consttante de temps thermique ($\tau_{TH}$) du récipient, en tenant compte de paramètres ($\alpha'$, L, $c_p$) du récipient et/ou du fluide de remplissage, qui définissent la constante de temps.

7. Procédé selon la revendication 3, caractérisé par le fait que l'on détermine expérimentalement le comportement thermique, dans le temps, du récipient.

8. Procédé selon la revendication 3, caractérisé par le fait que l'on identifie le comportement thermique, dans le temps, du récipient à partir de mesures, décalées dans le temps, de températures du récipient ($\theta_B(t_a)$, $\theta_B(t_b)$), en tenant compte des intervalles de temps entre les mesures.

9. Procédé selon l'une des revendications 1 à 7, caractérisé par le fait que l'on procède à la mesure de la température en prenant la moyenne de plusieurs mesures sur une certaine durée de mesure.

10. Procédé selon l'une des revendications 1 à 9, caractérisé par le fait que l'on procède à la mesure de la température en prenant la moyenne de plusieurs mesures en des endroits différents du récipient.

11. Procédé selon l'une des revendications 1 à 10, caractérisé par le fait que l'on procède à la mesure du rayonnement thermique, avant de mesurer la valeur de la pression et avant de fermer le récipient, en mesurant le rayonnement thermique provenant de l'espace creux du récipient, en tant que mesure de l'état intégral de l'énergie thermique.

12. Procédé selon la revendication 11, caractérisé par le fait que lors d'un mouvement relatif entre le

11

récipient et le dispositif (63) de mesure du rayonnement, on utilise une variation du rayonnement détecté, au moment où l'ouverture (65) du récipient passe dans la zone de sensibilité du dispositif (63) de mesure du rayonnement, comme critère permettant de savoir à quel instant ce dispositif effectue une mesure représentative.

13. Dispositif de contrôle d'étanchéité pour récipients, comportant une station de contrôle (3), dans laquelle est mesurée une valeur (p) de pression indicatrice d'une fuite du récipient, ainsi qu'un appareil de mesure d'une valeur indicatrice de la température ($\theta_B$) du récipient étant précisé que l'on compare la valeur de la pression mesurée, en tenant compte de la valeur indicatrice de la température du récipient, à une valeur limite de la pression, pour décider si un récipient est étanche ou non étanche, caractérisé par le fait que l'appareil de mesure (31) de la valeur indicatrice est un appareil (31, 63) de mesure de la température ou du rayonnement thermique, disposé à distance de la station de contrôle (3).

14. Dispositif selon la revendication 13, caractérisé par le fait que l'appareil de mesure est, côté sortie, relié à une entrée d'une unité de correction (9, 15) à la sortie de laquelle apparaît un signal qui est fonction du signal présent à l'entrée, étant précisé que, de préférence, la sortie de l'unité de correction (9, 15) est amenée à une entrée d'une unité de comparaison (13) présentant une seconde entrée sur laquelle est appliquée un autre signal qui correspond à la valeur mesurée de la pression (p), représentative de la fuite du récipient.

15. Dispositif selon la revendication 14, caractérisé par le fait que l'unité de correction (9, 15) comprend une unité de calcul.

16. Dispositif selon la revendication 14, caractérisé par le fait qu'une sortie de l'appareil de mesure (31) est amenée à une entrée d'une unité (35) de fonction temporelle, par le fait qu'il est prévu un organe de commutation (39) qui indique que l'on procède au contrôle d'étanchéité, étant précisé que l'organe de commutation (39) commande alors (37) la lecture du signal de sortie de l'unité de fonction temporelle et que le signal de sortie de l'unité (35) de fonction temporelle est amené à l'entrée de l'unité de correction (9) conformément à la température du récipient lors du déclenchement de l'organe de commutation (39).

17. Dispositif selon la revendication 16, caractérisé par le fait que l'unité de fonction temporelle comprend une unité de calcul (33a) avec un organe d'entrée pour introduire des paramètres (a', L, cp) du récipient et du fluide de remplissage, et par le fait que cette unité de fonction temporelle calcule la constante de temps thermique ($\tau_{TH}$) du récipient et de préférence, au moins lors du déclenchement de l'organe de commutation (39), elle calcule et émet, à partir du signal présent à l'entrée de l'unité de fonction temporelle, utilisé comme valeur de départ, de la constante de temps ($\tau_{TH}$), la valeur d'une fonction temporelle à l'instant du déclenchement de l'organe de commutation.

18. Dispositif selon la revendication 16, caractérisé par le fait que l'appareil de mesure (31a, b) émet à au moins deux instants ($t_b$, $t_b$) une valeur de mesure($\theta_B(t_a)$, $\theta_B$ ($t_b$)), et par le fait que l'unité (33, 35) de fonction temporelle, à partir des valeurs de mesure et du temps écoulé entre leurs apparitions ($t_1$ $t_2$), identifie le comportement thermique, dans le temps, du récipient, en particulier sa constante de temps ($\tau_{TH}$) et simule ce comportement avec au moins une valeur de mesure de la température ($\theta_B(t_a)$) comme valeur de base, et par a le fait que, par l'organe de commutation (39), une sortie de l'unité de fonction temporelle est commutée sur l'unité de correction (9), avec une valeur du signal qui est alors représentative de la température du récipient lors du contrôle d'étanchéité dans la station de contrôle.

19. Dispositif selon l'une des revendications 13 à 18, caractérisé par le fait que l'appareil de mesure (31, 63) procède à une séquence de plusieurs mesures et qu'une unité de calcul de la moyenne dans le temps est connectée en aval de cet appareil de mesure.

20. Appareil selon l'une des revendications 13 à 19, caractérisé par le fait que l'appareil de mesure de température comporte plusieurs capteurs de température dont les signaux de sortie sont amenés à une unité de calcul de moyenne.

21. Dispositif selon l'une des revendications 13 à 20, caractérisé par le fait que l'appareil de mesure comporte au moins un capteur de rayonnement (63) qui est disposé, par rapport au récipient (X), de façon telle que l'ouverture (65) de ce récipient se trouve dans la zone de sensibilité dudit capteur, et par le fait qu'il est prévu de préférence un détecteur de position (65) qui transmet alors le signal de sortie du capteur en tant que signal représentatif de la température, lorsque l'ouverture (65) du récipient se trouve dans la zone de sensibilité du capteur.

22. Dispositif selon la revendication 21, caractérisé par le fait que le détecteur de position est constitué par le capteur (63) lui-même, en aval duquel est connectée une unité (65) qui définit une valeur de seuil et qui trasmet ($S_{63}$) le signal de sortie du capteur lorsque le signal de sortie du capteur atteint sa valeur de seuil ($K_o$).

**Claims**

1. Process for the leakage-testing of containers, in which a container (1) is placed under pressure ($p_o$) or is evacuated, and a pressure value is measured as an indication of the degree of leakage, whereby a specified limit pressure value ($p_G$) is preselected to decide whether a container is tight or leaky and, furthermore, a value which is significant to the prevailing temperature of the container ($\theta_B$) is measured at a time different from that of the measurement of the pressure value (p) and a value derived therefrom is used as a correction for the measured pressure value, characterised in that, the pressure value is measured in a pressure-test station (3) and the temperature or thermal radiation of the container is measured distant from the test station (3) and the container (1) is moved into the test station or away from the test station to measure the temperature or thermal radiation and said correction is determined from the measured temperature ($\theta_B$) or thermal radiation and the time interval ($t_1 - t_2$) between the measurement of the pressure value in the test station (3) and the measurement of the temperature or thermal radiation.

2. Process according to claim 1, characterised in that, the correction is applied to the limit pressure value ($p_G$) or to the measured pressure value (p).

3. Process according to any of claims 1 or 2, characterised in that, the thermal time response of the container (1) is determined and the temperature of the container ($\theta_B(t_1)$) during measurement of the pressure value (p) is determined from the measured temperature ($\theta_B(t_2)$) or thermal radiation, the time interval ($t_1 - t_2$) and said thermal time response.

4. Process according to any of claims 1 to 3, characterised in that, the temperature of the container ($\theta_B(t_1)$) at the measurement of the pressure value (p) is taken into account and that for correction, the temperature-dependency of the limit pressure value ($p_G(\theta_B)$) or of the measured pressure value (p) is taken into account.

5. Process according to claim 4, characterised in that, the temperature-dependency of the limit pressure value or of the measured pressure value is stored as a function of the independent variable "temperature" and the determined temperature of the container at measurement of said pressure value is entered into said function.

6. Process according to claim 3, characterised in that, the thermal time response of the container is determined from the measurement of at least one container temperature ($\theta_B$) and from prior calculation of the thermal time-constant of the container ($\tau_{TH}$), taking into consideration container and/or filling medium parameters which determine the time constant ($a'$, L, $c_p$).

7. Process according to claim 3, characterised in that, the thermal time response of the container is determined by experiment.

8. Process according to claim 3, characterised in that, the thermal time response of the container is identified from timed measurements of container temperatures ($\theta_B(t_a)$, $\theta_B(t_b)$), taking into consideration the time intervals between measurements.

9. Process according to any of claims 1 to 7, characterised in that, the temperature measurement is effected by averaging several measurements over a measurement period.

10. Process according to any of claims 1 to 9, characterised in that, the temperature measurement is effected by averaging several measurements on different points of the container.

11. Process according to any of claims 1 to 10, characterised in that, as a measurement of the integral thermal energy state, the thermal radiation is measured prior to the pressure value measurement and before the container is closed, by measuring the thermal radiation from the hollow space of the container.

12. Process according to claim 11, characterised in that, at relative movement between container and radiation-measuring arrangement (63), a variation in the radiation which is detected when the opening of the container (65) enters the sensitivity range of the radiation-measuring arrangement (63) is used as a criterion as to when this arrangement carries out a significant measurement.

13. Leakage-testing device for containers with a test station (3), in which a pressure value (p) significant for a leak in the container is measured, and with a device for measuring a variable significant for the container temperature ($\theta_B$), whereby the measured pressure value is compared to a limit pressure value (13), taking into consideration the variable significant for the container temperature, so as to decide whether a container is tight or leaky, characterised in that, the measuring device (31) for the significant variable is a temperature or thermal radiation-measuring device (31, 63) placed distant from the test station (3).

14. Device according to claim 13, characterised in that, the output of the measuring device is connected to an input of a correction unit (9, 15) at whose output a signal appears in dependency from the signal at the input, whereby the output of the correction unit (9, 15) is preferably fed to one input of a comparator unit (13), with a second input to which a further signal is fed, which corresponds to the measured pressure value (p) representative for the leakage of the container.

15. Device according to claim 14, characterised in that, the correction unit (9, 15) comprises a data processor unit.

16. Device according to claim 14, characterised in that, one output of the measuring device (31) is fed to one input of a time-function unit (35), that a switching device (39) is provided, which indicates the implementation of the leakage test, whereby the switching device (39) then controls (37) the reading of the output of the time-function unit, and the output signal of the time-function unit (35), corresponding to the temperature of the container when the switching device (39) is triggered, is fed to the input of the correction unit (9).

17. Device according to claim 16, characterised in that, the time-function unit comprises a data processor unit (33a) with an input device for entering container and filling medium parameters ($a'$, L, $c_p$), and that it computes the thermal time-constant ($\tau_{TH}$) of the container and preferably, and at least when the switching device (39) is triggered, computes from the signal at the input of the time-function unit as an initial value and from the time constant ($\tau_{TH}$) the value of a time function at the moment of triggering the switching device, and outputs it.

18. Device according to claim 16, characterised in that, the measuring device (31a, b) outputs a measured value ($\theta_B(t_b)$), $\theta_B(t_b)$) at at least two instants ($t_b$, $t_b$), and that the time-function unit (33, 35) identifies the time response of the container from the measured values and the time-difference between their occurrence ($t_1 \, t_2$), and particularly the time-constant ($\tau_{TH}$) of said container and simulates this response by means of at least one measured temperature value ($\theta_B(t_b)$) as base value, and that one output of the time-function unit is connected to the correction unit (a) by the switching device (39) with a signal value representing the temperature of the container at the leakage test in the test station.

19. Device according to claims 13 to 18, characterised in that, the measuring device (31, 63) sequentially carries out several measurements and that a time-averaging unit is connected in series with it.

20. Device according to any of claims 13 to 19, characterised in that, the temperature measuring device comprises several temperature sensors, whose outputs are fed to an averaging unit.

21. Device according to any of claims 13 to 20, characterised in that, the measuring device comprises at least one radiation sensor (63) that is placed in relation to the container (X) so that the opening (65) of the latter lies within its sensitivity range, and that preferably a position detector (65) is provided that passes the output of the sensor in the form of a signal representing the temperature then, when the opening of the container (65) lies within the sensitivity range of the sensor.

22. Device according to claim 21, characterised in that, the position detector is formed by the sensor (63) itself to which a threshold detector (65) is connected in series, which passes the sensor output ($S_{63}$) then, when the sensor output signal reaches its threshold value ($K_o$).

FIG. 1

FIG. 2

FIG. 3

FIG. 4

2

$$\Theta_B(t) = \Theta_B(t_2) \cdot \exp[-(t-t_2)/\tau_{TH}]$$

$$\Theta_B(t_1) = \Theta_B(t_2) \cdot \exp[-(t_1-t_2)/\tau_{TH}]$$

FIG. 5

FIG. 6

$$\theta_B(t_2)$$

SIMULATION

$$\theta_B(t) = \theta_B(t_2)e^{\dfrac{-(t-t_2)}{\tau_{TH}}}$$

$\tau_{TH}$

31

35

37

$t_1$

$t$

FIG. 7

$\alpha'$

L

$c_p$

RECHNER

$\tau_{TH}$

33a

FIG.8

FIG. 9